# EUROPEAN PATENT SPECIFICATION

(11) **EP 3 376 084 B1**
(45) Date of publication and mention of the grant of the patent: **17.02.2021**
(21) Application number: 18160359.8
(22) Date of filing: 06.03.2018
(51) Int. Cl.: F16K 39/02, F16K 39/04, F16K 3/24, F16K 3/26, F16K 27/02, F16K 27/04

(54) **LOW FRICTION VALVE**
REIBUNGSARMES VENTIL
SOUPAPE À FAIBLE FROTTEMENT

(30) Priority: 13.03.2017 DK PA201700174
(43) Date of publication of application: 19.09.2018
(73) Proprietor: Danfoss A/S, 6430 Nordborg (DK)
(72) Inventor: OMOVSEK, Jernej, 6430 Nordborg (DK); OMEJC, Luka, 6430 Nordborg (DK); DROBEZ , Benjamin, 6430 Nordborg (DK)
(74) Representative: Stevens, Brian

(56) References cited:
- EP-A1- 3 067 596
- DE-A1- 1 911 522
- GB-A- 2 033 549
- US-A1- 2010 270 491

## Description

### BACKGROUND

The present invention relate to a valve suitable for being operated in connection with a self-acting pressure actuator.

For such valves the forces to operate the valve needs to be sufficiently low for the actuator being capable to move the flow regulating part to offer a quick and sufficient reaction in dependence to e.g. changes in a differential pressure,.

Self-acting differential pressure actuators could e.g. of the kind where a diaphragm separates a volume into two separate pressure chambers in pressure communication to two different positions in the flow circuit whereto the valve is connected. The difference in pressure in the two separate pressure chambers deflects the diaphragm which in turn is connected to the flow regulating part changing its position in response. If the friction is significant it might influence the efficiency in the valves regulation of the pressure.

If the actuator were to counterforce a significant force to move the flow regulating part it might critically compromise the efficiency of the pressure regulation.

### SUMMARY OF THE INVENTION

To solve the problems with prior valves, the present invention thus introduces a valve comprising a valve body defining a fluid flow passageway between an inlet and an outlet; a valve seat operating together with a closure member capable to move between a plural of distances relative to said valve seat forming open positions and a closed position where the closure member is in contact with the valve seat, and disposed within the fluid flow passageway between the inlet and the outlet, wherein the closure member at least partly is positioned within a volume having an internal wall and an opening area where at least in the vicinity of the opening area a contact element being in low friction contact with the outer side of the closure member in an open position and a sealing contact in the closed position. By low friction contact is meant that the parts does form contact but this being in a manner where they are not necessarily in contact in a sealing manner, but fluids may leak through the connection, but where the force formed of friction of the contact when the closure element moves is significantly lower than that of a sealing connection letting no fluids leaking through, such as if the contact member was a rubber sealing. This gives for example the advantage that a self-acting actuator can be connected to move the closure member. If an motor driven actuator is connected it would just be a matter of dimensioning the driving force to overcome the force of a sealing connection, but for self-acting actuators such a force could offer critical counter force against the actuation. The solution reduces such a force, but ensures the closing position is still sealed and thus fully closed, event when the connection is still un-tight when in an open position.

To ensure sealing in e.g. closed positions the outer side of the closure member in an embodiment may comprises a first sealing member and a second sealing member forming a seal of the passageway when

In an embodiment the first sealing member is positioned such that when the valve is closed, the first sealing member contacts the valve seat, thus helping to make a fluid tight sealing contact when in closed position.

In an embodiment the second sealing member is positioned such that when the valve is closed, the second sealing member contacts the contact element forming a fluid tight connection, where there is no leaking fluid.

To keep the first and/or second sealing members in position, in an embodiment the first and/or second sealing member is positioned in grooves formed in the closing member.

To ease construction, in an embodiment the closing member is formed of a centre piece having an internal hollow, a first top piece being fixed to the first end of the centre piece, said first sealing member squeezed between said centre piece and first sealing member, and a second top piece being fixed to the second end of the centre piece, said second sealing member squeezed between said centre piece and second sealing member.

To ensure the forces of the fluids in the fluid passageway does not offer any critical counter pressure against the movement of the closure member, in an embodiment said first and second top pieces includes openings forming access for the fluids in the fluid passageway to said internal hollow and the volume.

According to the invention, the contact member is a brush element and may be formed of a metal, such as bronze.

In an embodiment, the closure member is connected to a pressure actuator, such as a self-acting pressure actuator, to move the closure member between the plural of positions, where in an embodiment the connection is such that the closure member is connected to a first section of a valve stem, and where an actuator is connected to a second section of said valve stem.

One choice for sealing members according to one embodiment, is that at least one of the first and second sealing member is a quad-shaped sealing member having an part projecting out relative to the outer side thus forming contact to the contact member and / or valve seat.

The present invention further relate to the method of operating the valve according to any of the previous embodiments, the method being in the open positions to have a low friction contact, but a sealing contact in the closed position.

### FIGURES

- Fig. 1: A valve according to the present invention a an open position.
- Fig. 2: A closure member according to an embodiment of the present invention formed of a plural of pieces.
- Fig. 3: A valve according to the present invention a an closed position.
- Fig. 4: A valve according to the present invention a fully open position.
- Fig. 5: A cross section view of a quad-shaped sealing member as is being used in the valve according to an embodiment.
- Fig. 6: Illustration of one embodiment use of a quad-shaped sealing member.

### DETAILED DESCRIPTION OF THE INVENTION

It should be understood that the detailed description and specific examples, while indicating embodiments of the invention, are given by way of illustration only, since various changes and modifications within the scope of the invention will become apparent to those skilled in the art from the detailed description, limited only by the appended claims.

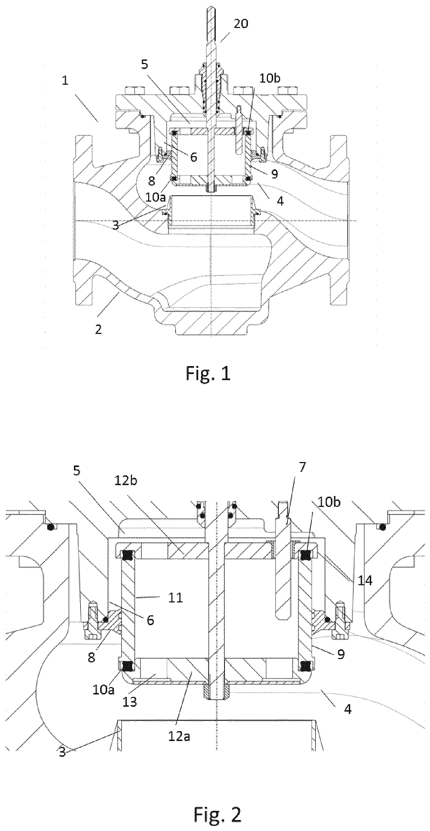

Fig. 1 illustrates a valve (1) comprising a valve body (2) defining a fluid flow passageway between an inlet and an outlet. A valve seat (3) is positioned within the within the fluid flow passageway between the inlet and the outlet and operates together with a closure member (4) to define a valve opening by the relative position of the closure member (4) relative to the valve seat (3). The closure member (4) thus capable to move between a plural of distances relative to said valve seat (3) thus defining a plural of valve openings from a most open, or fully open position, to a fully closed position where the closure member (4) is in contact with the valve seat (3). The valve openings, or distances between the closure member (4) and the valve seat (3), thus defines the flow rate through fluid flow passageway from the inlet to the outlet.

The closure member (4) is at least partly positioned within a volume (5) formed inside the valve body (2) and having an internal wall (6) and an opening area, where at least in the vicinity of the opening area a contact element (8) is positioned in contact to the outer side (9) of the closure member (4) comprises a first sealing member (10a) and a second sealing member (10b).

The outer side (9) of the closure member (4) comprises a first sealing member (10a) and a second sealing member (10b), where in one embodiment, e.g. seen more clearly in Fig. 2, the first (10a) and/or second (10b) sealing member is positioned in grooves formed in the closing member (4).

In an embodiment the closing member (4) is formed of a centre piece (11) having an internal hollow, a first top piece (12a) being fixed to the first end of the centre piece (11) and/or a second top piece (12b) being fixed to the second end of the centre piece (11).

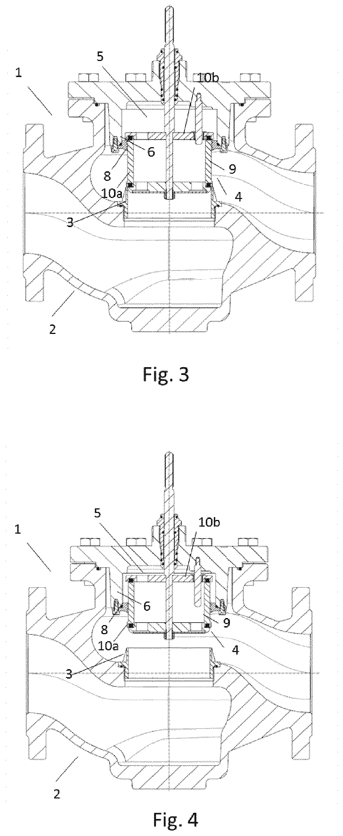

In one embodiment the outer side (9) of the closure member (4) forms the contact surface of the closure member (4) to the inflowing fluid from the right to the left, whereas its inner surface would form the contact surface given a flow from the left to the right. The distance the closure member (4) to the valve seat (3) defines the valve opening. In figure 3 the position of the closure member (4) is such that it contacts the valve seat (3) thus closing all fluid flow through the valve, either the outer surface (9) or the inner surface of the closure member (9) blocking the fluid flow through the passageway.

Seen in e.g. figure 2 is also the first sealing member (10a) being squeezed between the centre piece (11) and the first top piece (12a), and the second sealing member (10b) squeezed between said centre piece (11) and second sealing member (10b). The grooves comprising the first and/or second sealing members (10a, 10b) may be formed in the circumference of the outer side centre piece (11) possible at the circumference of the outer side (9) and/or fully or partly formed at the top and bottom of the centre piece (11) being in contact to the first and second top pieces (12a, 12b) respectively. Alternatively or additionally grooves are formed in the first and second top pieces (12a, 12b), the first and second sealing members (10a, 10b) being positioned in a grove formed in either of the elements (11, 12a, 12b) or partly in each of two of the combined pieces as the illustrated embodiment.

In an embodiment the first and second top pieces (12a, 12b) includes openings (13) forming access for the fluids in the fluid passageway to said internal hollow and the volume (5). These are formed to balance the pressures acting across the closure member (4), and to ensure there to be little counter pressure from the fluid flow when moving the closure member (4).

The valve (1) may include an anti-rotational element (7) operating together with the closure element (4) such that the closure element (4) unhindered can move among its plural of positions, but is prevented from rotation.

When the valve is fully closed, figure 3, the closure member (4) contacts the valve seat (3), where in one embodiment the first sealing member (10a) contacts the valve seat (3), either as the sole contact point or in combination with other parts of the closure member (4). The first sealing member (10a) thus in the closed position may form a seal against flow passing from inlet to outlet at least in that it seals the first top piece (12a) to the centre piece (11), but possible also by its contact to the closure member (4).

The closure member (4) includes a flange (14) projecting further out into the volume (5) than the centre piece (11). In one embodiment as illustrated this is formed by the diameter of the second top piece (12b) being larger than that of the centre piece (11). The flange (14) is formed and positioned such that when the closure member (4) is in closed position the contact member (8) contacts the flange (14) in a manner where when under influence from the forces of the fluid flow the contact member (8) is pushed against the flange (14) to make a sealing against fluid flow. In one embodiment the second sealing member (10b) is positioned such that when the valve (1) is closed, the second sealing member (10b) contacts the contact element (8) forming part of the seal against fluid flow.

The contact member (8) is adapted to contact the outer side (9) in without causing significant friction when the closure member (4) moves between the plural of distances. For prior art valves it has been known introducing a sealing element in the internal wall (6) of the volume (5) making a tight seal in the contact to the outer side (9) of the closure member (4). This however in addition to make a seal, also offer an significant friction, and thus resistance, in the movement of the closure member between its plural of positions. This could be a problem, such as when the valve (1) operates in a self-acting manner connected to a differential pressure actuator, such as of the kind where a diaphragm separates a volume into two separate pressure chambers in pressure communication to two different positions in the flow circuit (one or both possible being internal pressure conduits formed in the valve body (2)). The difference in pressure in the two separate pressure chambers deflects the diaphragm which in turn is connected to the closure member (4) changing its position in response. If the friction is significant it might influence the efficiency in the valves (1) regulation of the pressure.

Therefore the contact member (8) is introduced offering none, or at least insignificant, friction to the movement of the closure member (4). The compromise is that when the closure member (4) is in an open position there will be some leakage of fluid through the contact of the contact member (8) to the outer side (9) of the closure member (4), and thus into the volume (5).

The contact member (8) is a brush element offering all the required properties. The contact member (8), such as in the form of a brush, may be formed by metal, such as bronze, cobber, stainless steel etc.

When the valve (1) is connected to an actuator, such as of the self-acting differential pressure kind as described above, the closure member (4) may be connected to the actuator through a valve stem (20), such that the closure member (1) is connected to a first section of a valve stem (20), and where an actuator is connected to a second section of said valve stem (20).

In one embodiment at least one of the first (10a) and second (10b) sealing member is a quad-shaped sealing member having an part projecting out relative to the outer side (9) thus forming contact to the contact member (8) and / or valve seat (3).

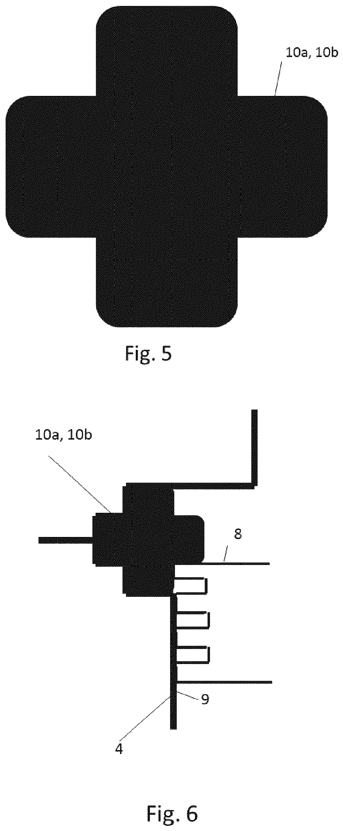

Fig. 5 illustrates a cross-section of a quad-shaped sealing member such for the first (10a) and/or second (10b) sealing member, and fig. 6 illustrate it in one embodiment where it operates in contact with the contact member (8) to make a sealing connection, and where it projects out relative to the outer surface (9) of the closure member (4).

## Claims

1. A valve (1) comprising a valve body (2) defining a fluid flow passageway between an inlet and an outlet; a valve seat (3) operating together with a closure member (4) capable to move between a plural of distances relative to said valve seat (3) forming open positions and a closed position where the closure member (4) is in contact with the valve seat (3), and disposed within the fluid flow passageway between the inlet and the outlet, wherein the closure member (4) at least partly is positioned within a volume (5) having an internal wall (6) and an opening area, where the closure member (4) includes a flange (14) projecting further out into the volume than a center piece, wherein at least in the vicinity of the opening area, a contact element (8) is in low friction contact with the outer side (9), of the closure member (4) in an open position, where low friction contact means the parts do form contact but this being in a manner where they are not necessarily in contact in a sealing manner, but fluids may leak through the connection, and a sealing contact in the closed position where the contact element (8) contacts the flange (14) in a manner where when under influence from the forces of the fluid flow the contact element (8) is pushed against the flange (14) to make a sealing against fluid flow, wherein the contact element (8) is a brush element.

2. A valve (1) according to claim 1, wherein the outer side (9) of the closure member (4) comprises a first sealing member (10a) and a second sealing member (10b).

3. A valve (1) according to claim 2, wherein the first sealing member (10a) is positioned such that when the valve (1) is closed, the first sealing member (10a) contacts the valve seat (3).

4. A valve (1) according to claim 2 or 3, wherein the second sealing member (10b) is positioned such that when the valve (1) is closed, the second sealing member (10b) contacts the contact element (8) forming a fluid tight connection.

5. A valve (1) according to any of claims 2-4, wherein the first (10a) and/or second (10b) sealing member is positioned in grooves formed in the closing member (4).

6. A valve (1) according to claim 5, wherein the closing member (4) is formed of a centre piece (11) having an internal hollow, a first top piece (12a) being fixed to the first end of the centre piece (11), said first sealing member (10a) squeezed between said centre piece (11) and first top piece (12a), and a second top piece (12b) being fixed to the second end of the centre piece (11), said second sealing member (10b) squeezed between said centre piece (11) and second top piece (12b).

7. A valve (1) according to claim 6, wherein said first and second top pieces (12a, 12b) includes openings (13) forming access for the fluids in the fluid passageway to said internal hollow and the volume (5).

8. A valve (1) according to any of the preceding claims, wherein the contact element (8) is formed of a metal, such as bronze.

9. A valve (1) according to any of the preceding claims, wherein the closure member (4) is connected to a pressure actuator.

10. A valve (1) according to claim 9, wherein the closure member (1) is connected to a first section of a valve stem (20), and where the actuator is connected to a second section of said valve stem (20).

11. A valve (1) according to any of claims 2-7, wherein at least one of the first (10a) and second (10b) sealing member is a quad-shaped sealing member having a part projecting out relative to the outer side (9) thus forming contact to the contact member (8) and / or valve seat (3).

12. A method to operate a valve (1) comprising a valve body (2) defining a fluid flow passageway between an inlet and an outlet; a valve seat (3) operating together with a closure member (4) capable to move between a plural of distances relative to said valve seat (3) forming open positions and a closed position where the closure member (4) is in contact with the valve seat (3) where the closure member (4) includes a flange (14) projecting further out into the volume than a center piece, and disposed within the fluid flow passageway between the inlet and the outlet and where a contact element (8) contact with the outer side (9) of the closure element (4), the method consisting in that the contact element (8) has, the open positions, a low friction contact, where low friction contact means the parts does form contact but this being in a manner where they are not necessarily in contact in a sealing manner, but fluids may leak through the connection, but a sealing contact in the closed position where the contact member (8) contacts the flange (14) in a manner where when under influence from the forces of the fluid flow the contact element (8) is pushed against the flange (14) to make a sealing against fluid flow, wherein the contact element (8) is a brush element.

13. The method according to claim 12 operating on the valve according to any of the claims 2 to 11.

## Patentansprüche

1. Ventil (1), umfassend einen Ventilkörper (2), der einen Fluidströmungsdurchgang zwischen einem Einlass und einem Auslass definiert; einen Ventilsitz (3), der mit einem Verschlusselement (4) zusammenwirkt, das in der Lage ist, sich zwischen einer Mehrzahl von Abständen in Relation zu dem Ventilsitz (3) zu bewegen, sodass offene Positionen und eine geschlossene Position, in der das Verschlusselement (4) in Kontakt mit dem Ventilsitz (3) ist, ausgebildet werden, und das in dem Fluidströmungsdurchgang zwischen dem Einlass und dem Auslass angeordnet ist, wobei das Verschlusselement (4) zumindest teilweise in einem Volumen (5) mit einer Innenwand (6) und einem Öffnungsbereich positioniert ist, wobei das Verschlusselement (4) einen Flansch (14) umfasst, der weiter hinaus in das Volumen als ein Mittelteil ragt, wobei zumindest in der Nähe des Öffnungsbereichs ein Kontaktelement (8) in geringem Reibungskontakt mit der Außenseite (9) des Verschlusselements (4) in einer offenen Position ist, wobei geringer Reibungskontakt bedeutet, die Teile bilden zwar einen Kontakt, jedoch in einer Weise, in der sie nicht notwendigerweise in einer abdichtenden Weise in Kontakt sind, sondern Fluide durch die Verbindung entweichen können, und einen Dichtungskontakt in der geschlossenen Position, in der das Kontaktelement (8) mit dem Flansch (14) in einer Weise in Kontakt ist, in der, unter dem Einfluss von den Kräften der Fluidströmung, das Kontaktelement (8) gegen den Flansch (14) gedrückt wird, um eine Dichtung gegen Fluidströmung herzustellen, wobei das Kontaktelement (8) ein Bürstenelement ist.

2. Ventil (1) nach Anspruch 1, wobei die Außenseite (9) des Verschlusselements (4) ein erstes Dichtungselement (10a) und ein zweites Dichtungselement (10b) umfasst.

3. Ventil (1) nach Anspruch 2, wobei das erste Dichtungselement (10a) derart positioniert ist, dass, wenn das Ventil (1) geschlossen ist, das erste Dichtungselement (10a) mit dem Ventilsitz (3) in Kontakt ist.

4. Ventil (1) nach Anspruch 2 oder 3, wobei das zweite Dichtungselement (10b) derart positioniert ist, dass, wenn das Ventil (1) geschlossen ist, das zweite Dichtungselement (10b) mit dem Kontaktelement (8) in Kontakt ist, sodass eine fluiddichte Verbindung ausgebildet wird.

5. Ventil (1) nach einem der Ansprüche 2-4, wobei das erste (10a) und/oder zweite (10b) Dichtungselement in Nuten positioniert ist, die in dem Verschlusselement (4) ausgebildet sind.

6. Ventil (1) nach Anspruch 5, wobei das Verschlusselement (4) aus einem Mittelteil (11) mit einem inneren Hohlraum, einem ersten oberen Teil (12a), das an dem ersten Ende des Mittelteils (11) fixiert ist, wobei das erste Dichtungselement (10a) zwischen das Mittelteil (11) und das erste obere Teil (12a) gequetscht ist, und einem zweiten oberen Teil (12b), das an dem zweiten Ende des Mittelteils (11) fixiert ist, wobei das zweite Dichtungselement (10b) zwischen das Mittelteil (11) und das zweite obere Teil (12b) gequetscht ist, ausgebildet ist.

7. Ventil (1) nach Anspruch 6, wobei die ersten und zweiten oberen Teile (12a, 12b) Öffnungen (13) umfassen, die einen Zugang für die Fluide in dem Fluiddurchgang zu dem inneren Hohlraum und dem Volumen (5) ausbilden.

8. Ventil (1) nach einem der vorhergehenden Ansprüche, wobei das Kontaktelement (8) aus einem Metall, beispielsweise Bronze, besteht.

9. Ventil (1) nach einem der vorhergehenden Ansprüche, wobei das Verschlusselement (4) mit einem Druckaktuator verbunden ist.

10. Ventil (1) nach Anspruch 9, wobei das Verschlusselement (1) mit einem ersten Abschnitt eines Ventilschafts (20) verbunden ist, und wobei der Aktuator mit einem zweiten Abschnitt des Ventilschafts (20) verbunden ist.

11. Ventil (1) nach einem der Ansprüche 2-7, wobei mindestens eines des ersten (10a) und zweiten (10b) Dichtungselements ein viereckförmiges Dichtungselement mit einem Teil ist, der in Relation zu der Außenseite (9) herausragt, wodurch ein Kontakt zu dem Kontaktelement (8) und/oder Ventilsitz (3) hergestellt wird.

12. Verfahren zum Betreiben eines Ventils (1) umfassend einen Ventilkörper (2), der einen Fluidströmungsdurchgang zwischen einem Einlass und einem Auslass definiert; einen Ventilsitz (3), der mit einem Verschlusselement (4) zusammenwirkt, das in der Lage ist, sich zwischen einer Mehrzahl von Abständen in Relation zu dem Ventilsitz (3) zu bewegen, sodass offene Positionen und eine geschlossene Position, in der das Verschlusselement (4) in Kontakt mit dem Ventilsitz (3) ist, ausgebildet werden, wobei das Verschlusselement (4) einen Flansch (14) umfasst, der weiter hinaus in das Volumen als ein Mittelteil ragt, und der in dem Fluidströmungsdurchgang zwischen dem Einlass und dem Auslass angeordnet ist, und wobei ein Kontaktelement (8) mit der Außenseite (9) des Verschlusselements (4) in Kontakt ist, wobei das Verfahren darin besteht, dass das Kontaktelement (8) in den offenen Positionen einen geringen Reibungskontakt aufweist, wobei geringer Reibungskontakt bedeutet, die Teile bilden zwar einen Kontakt, jedoch in einer Weise, in der sie nicht notwendigerweise in einer abdichtenden Weise in Kontakt sind, sondern Fluide durch die Verbindung entweichen können, jedoch einen Dichtungskontakt in der geschlossenen Position, in der das Kontaktelement (8) mit dem Flansch (14) in einer Weise in Kontakt ist, in der, unter dem Einfluss von den Kräften der Fluidströmung, das Kontaktelement (8) gegen den Flansch (14) gedrückt wird, um eine Dichtung gegen Fluidströmung herzustellen, wobei das Kontaktelement (8) ein Bürstenelement ist.

13. Verfahren nach Anspruch 12, das an dem Ventil nach einem der Ansprüche 2 bis 11 durchgeführt wird.

## Revendications

1. Soupape (1) comprenant un corps de soupape (2) définissant un passage d'écoulement de fluide entre une entrée et une sortie ; un siège de soupape (3) fonctionnant conjointement avec un élément de fermeture (4) pouvant se déplacer entre une pluralité de distances par rapport audit siège de soupape (3), formant des positions ouvertes et une position fermée où l'élément de fermeture (4) est en contact avec le siège de soupape (3), et disposé à l'intérieur du passage d'écoulement de fluide entre l'entrée et la sortie, l'élément de fermeture (4) étant au moins partiellement positionné à l'intérieur d'un volume (5) ayant une paroi interne (6) et une zone d'ouverture, l'élément de fermeture (4) comportant un rebord (14) se projetant davantage à l'intérieur du volume qu'une pièce centrale, dans laquelle, au moins à proximité de la zone d'ouverture, un élément de contact (8) est en contact à faible frottement avec le côté externe (9) de l'élément de fermeture (4) dans une position ouverte, un contact à faible frottement signifiant que les parties font contact, mais d'une manière telle qu'ils ne sont pas nécessairement en contact de façon étanche, mais des fluides peuvent fuir par le raccord, et un contact étanche dans la position fermée où l'élément de contact (8) touche le rebord (14) d'une manière telle que, lorsqu'il est sous l'influence des forces de l'écoulement de fluide, l'élément de contact (8) est poussé contre le rebord (14) pour assurer l'étanchéité contre un écoulement de fluide, l'élément de contact (8) étant un élément en forme de brosse.

2. Soupape (1) selon la revendication 1, dans laquelle le côté externe (9) de l'élément de fermeture (4) comprend un premier élément d'étanchéité (10a) et un deuxième élément d'étanchéité (10b).

3. Soupape (1) selon la revendication 2, dans laquelle le premier élément d'étanchéité (10a) est positionné de telle sorte que, quand la soupape (1) est fermée, le premier élément d'étanchéité (10a) touche le siège de soupape (3).

4. Soupape (1) selon la revendication 2 ou 3, dans laquelle le deuxième élément d'étanchéité (10b) est positionné de telle sorte que, quand la soupape (1) est fermée, le deuxième élément d'étanchéité (10b) touche l'élément de contact (8), formant un raccord étanche aux fluides.

5. Soupape (1) selon l'une quelconque des revendications 2 à 4, dans laquelle les premier (10a) et/ou deuxième (10b) éléments d'étanchéité sont positionnés dans des rainures formées dans l'élément de fermeture (4).

6. Soupape (1) selon la revendication 5, dans laquelle l'élément de fermeture (4) est constitué d'une pièce centrale (11) ayant un creux interne, une première pièce supérieure (12a) fixée à la première extrémité de la pièce centrale (11), ledit premier élément d'étanchéité (10a) étant serré entre lesdites pièce centrale (11) et première pièce supérieure (12a), et une deuxième pièce supérieure (12b) fixée à la deuxième extrémité de la pièce centrale (11), ledit deuxième élément d'étanchéité (10b) étant serré entre lesdites pièce centrale (11) et deuxième pièce supérieure (12b).

7. Soupape (1) selon la revendication 6, dans laquelle lesdites première et deuxième pièces supérieures (12a, 12b) comportent des ouvertures (13) donnant aux fluides accès au passage de fluide jusqu'audit creux interne et au volume (5).

8. Soupape (1) selon l'une quelconque des revendications précédentes, dans laquelle l'élément de contact (8) est constitué d'un métal tel que le bronze.

9. Soupape (1) selon l'une quelconque des revendications précédentes, dans laquelle l'élément de fermeture (4) est relié à un actionneur à pression.

10. Soupape (1) selon la revendication 9, dans laquelle l'élément de fermeture (1) est relié à une première section d'une tige de soupape (20), et dans laquelle l'actionneur est relié à une deuxième section de ladite tige de soupape (20).

11. Soupape (1) selon l'une quelconque des revendications 2 à 7, dans laquelle au moins un des premier (10a) et deuxième (10b) éléments d'étanchéité est un élément d'étanchéité de forme quadrilatérale ayant une partie faisant saillie par rapport au côté externe (9), faisant ainsi contact avec l'élément de contact (8) et/ou le siège de soupape (3).

12. Procédé de fonctionnement d'une soupape (1) comprenant un corps de soupape (2) définissant un passage d'écoulement de fluide entre une entrée et une sortie ; un siège de soupape (3) fonctionnant conjointement avec un élément de fermeture (4) pouvant se déplacer entre une pluralité de distances par rapport audit siège de soupape (3), formant des positions ouvertes et une position fermée où l'élément de fermeture (4) est en contact avec le siège de soupape (3), l'élément de fermeture (4) comportant un rebord (14) se projetant davantage à l'intérieur du volume qu'une pièce centrale, et disposé à l'intérieur du passage d'écoulement de fluide entre l'entrée et la sortie, et un élément de contact (8) touchant le côté externe (9) du composant de fermeture (4), le procédé consistant en ce que l'élément de contact (8) a, dans les positions ouvertes, un contact à faible frottement, un contact à faible frottement signifiant que les parties font contact, mais d'une manière telle qu'ils ne sont pas nécessairement en contact de façon étanche, mais des fluides peuvent fuir par le raccord, mais un contact étanche dans la position fermée où l'élément de contact (8) touche le rebord (14) d'une manière telle que, lorsqu'il est sous l'influence des forces de l'écoulement de fluide, l'élément de contact (8) est poussé contre le rebord (14) pour assurer l'étanchéité comprend un écoulement de fluide, l'élément de contact (8) étant un élément en forme de brosse.

13. Procédé selon la revendication 12 fonctionnant sur la soupape selon l'une quelconque des revendications 2 à 11.
